# EUROPEAN PATENT SPECIFICATION

(11) **EP 2 716 729 B1**
(45) Date of publication and mention of the grant of the patent: **20.02.2019**
(21) Application number: 12792847.1
(22) Date of filing: 22.05.2012
(51) Int. Cl.: C09K 3/10, C08J 9/10, C08J 9/38

(54) **SEALING MATERIAL**
DICHTUNGSMATERIAL
MATÉRIAU D'ÉTANCHÉITÉ

(30) Priority: 02.06.2011 JP 2011123999; 11.07.2011 JP 2011152560
(43) Date of publication of application: 09.04.2014
(73) Proprietor: Bridgestone Corporation, Tokyo 104-8340 (JP)
(72) Inventor: YAMAMOTO, Tomohiro, Yokohama-shi Kanagawa 244-8510 (JP)
(74) Representative: Lamb, Martin John Carstairs
(86) International application number: PCT/JP2012/063016
(87) International publication number: WO 2012/165216

(56) References cited:
- WO-A1-2010/137524
- JP-A- 3 146 531
- JP-A- 3 275 736
- JP-A- 2002 146 074
- JP-A- 2003 238 726
- JP-A- 2005 036 053
- JP-A- 2005 036 053
- US-A1- 2011 034 577

## Description

### Technical Field

The present invention relates to a sealing material to be provided between members for sealing a gap between the members, and particularly relates to a sealing material composed of a vulcanized foam of a rubber composition comprising ethylene-α-olefin-diene copolymer rubber component, wherein the sealing material has low density, and is improved in adhesion property to the surface of the members to be sealed with following the shape of the surface, and in water cut-off property.

### Background Art

Heretofore, a gap between members formed in constructs such as buildings, vehicles, electronic devices is filled with a sealing material, to provide water cut-off, heat insulation and sound absorption. The sealing material is widely applicable, for instance, to a sealing member of residential roof tiles, sash fringe, shutter fringe, outer wall joint, metal roof joint parts, a window-dam, sun-roof fringe, door fringe, and cowl-top seal in vehicles, a back member of indoor equipment, a door member of vending machine and a back member of refrigerator. Foams made of synthetic resins or rubbers are used for the sealing materials. The foams have appropriate repulsive force (compression stress). Therefore, the foam adheres in compliance with the irregularity on the surface of the members to sealed, under application of small compression deformation. Accordingly, an excellent seal property can be attained.

Above all, rubber foam obtained by expanding ethylene-α-olefin-diene copolymer rubber foam by using a blowing agent such as azodicarboxylic acid amide is preferably used as a sealing material, because of excellent weather resistance, heat resistance and seal properties (Patent Document 1). In the rubber foam, the smaller the cell diameter or the higher the cell density, the more improved the seal properties (water cut-off property, heat insulation property, sound absorption property, etc.) required by the foam. Therefore, the rubber foam is subjected to bubble control by use of a cell diameter control agent such as a fatty acid including stearic acid and a metal salt of fatty acid including zinc stearate.

The rubber foam prepared by use of a blowing agent mainly has a closed cell structure. Therefore, the foam tends to have low dimensional stability and flexibility, further, to have low adhesion property to the surface of the members to be sealed with following the shape of the surface, and sometimes does not have sufficient seal properties. As a countermeasure, the closed-cells in the rubber foam are broken in accordance with cell breakage treatment such as roll crush and vacuum crush, to produce a rubber foam having partially open-cell structure (Patent Document 2).

Reference is also made to JP 2005-036053 A, which discloses a method for producing a rubber foam, US 2011/034577 A1, which discloses polymeric compositions and methods of making the same and WO 2010/137524 A1, which discloses a sealing material and a method for producing the same.

### Prior Art Documents

### Patent Document

Patent Document 1: JP 2000-313762A
Patent Document 2: JP 001-311070A

### Summary of the Invention

### Problem to be solved by the Invention

It is desirable that the sealing materials made of a rubber foam have higher adhesion property to the surface of the members to be sealed with following the shape of the surface of the members. Therefore, for example, it is conceivable that the addition of more amount of a blowing agent causes increase of an expansion ratio and lowering of a density of the sealing materials to bring about improvement of flexibility.

However, even addition of more amount of a blowing agent occasionally allows the blowing to start in a state of low viscosity of the rubber, depending on the type of rubber component, since the degree of vulcanization of the rubber is not elevated at the beginning of the blowing, which does not enable sufficiently increase of viscosity of the rubber. In that case, the increased ratio of gas which flows out without being trapped in the rubber foam makes it difficult to obtain a rubber foam having low density and high flexibility. Further, the addition of more amount of a blowing agent causes the increase of cell diameter of the rubber foam, which brings about the lowering of the seal properties such as water cut-off property, and the occurrence of cracks, fracture and deformation during a cell breakage treatment as described in Patent Document 2 (in present invention, occasionally referred to as "deterioration of cell breakage treatment property"). Furthermore, in the case of adding a large amount of a cell diameter control agent such as a fatty acid and a metal salt of fatty acid in order to control cell diameter of the rubber foam increases, the rate of vulcanization of the rubber tends to decrease. The decrease of the rate of vulcanization also causes a state of low viscosity of the rubber at the beginning of the blowing. Therefore, it is difficult to obtain a rubber foam having low density and high flexibility as described above.

It is therefore an object of the present invention to provide a sealing material composed of a rubber foam, wherein the sealing material has low density without decrease of water cut-off property and deterioration of cell breakage treatment property.

Furthermore, an object of the present invention is to provide a sealing material composed of a rubber foam, wherein the sealing material has low density without decrease of water cut-off property and deterioration of cell breakage treatment property, and is improved in adhesion property to the surface of the members to be sealed with following the shape of the surface.

Furthermore, an object of the present invention is to provide a sealing material using the composition for a sealing material.

### Means for Solving the Problems

In order to attain the above object, the inventor of the present invention has studied a composition of rubber components which enable viscosity of the rubber to sufficiently increase at the beginning of the blowing. As a result, the inventor has found that a sealing material composed of a rubber foam having enhanced water cut-off property and low density can be obtained by using a composition for a sealing material comprising a specified copolymer rubber.

In more detail, the above object can be attained by a sealing material composed of a vulcanized foam of a composition, wherein the composition comprises a rubber component comprising copolymer rubbers of ethylene, α-olefin having 3 or more carbon atoms and unconjugated diene, a vulcanizing agent and a blowing agent, wherein the copolymer rubber consists of copolymer rubber A and copolymer rubber B, the copolymer rubber A being derived from ethylene, α-olefin having 3 or more carbon atoms and 3 to 5% by mass of unconjugated diene, and the copolymer rubber B being derived from ethylene, α-olefin having 3 or more carbon atoms and 9 to 15% by mass unconjugated diene, and a mass ratio (copolymer rubber B/copolymer rubber A) of the copolymer rubber B to the copolymer A is in the range of 30/70 to 40/60, wherein the composition further contains calcium stearate in the range of 1 to 3 parts by mass based on 100 parts by mass of the rubber component, and wherein the vulcanized foam is further subjected to a cell breakage treatment.

In case ethylene-α-olefin-diene copolymer rubber as a rubber component consists of only copolymer rubber having a low content of unconjugated diene, a degree of vulcanization of the rubber cannot be elevated during vulcanization and blowing of a composition for sealing material, and therefore the rubber become a state of low viscosity. Hence, it is difficult to obtain a rubber foam having low density. On the other hand, in case ethylene-α-olefin-diene copolymer rubber as a rubber component consists of only copolymer rubber having a high content of unconjugated diene, the rubber foam is apt to crack, and a cell breakage treatment property of the rubber foam occasionally deteriorates. A sealing material composed of a rubber foam having low density without decrease of water cut-off property due to cracking of the foam, and deterioration of cell breakage treatment property can be obtained by using a composition for a sealing material comprising the copolymer rubber A and the copolymer rubber B having the above-mentioned content of unconjugated diene, with the above-mentioned mass ratio.

Preferred embodiments of the sealing material according to the present invention are described as follows:
(1) The unconjugated diene of the copolymer rubber includes 5-ethylidene-2-norbornene.
(2) The sealing material further contains zinc stearate in the range of 2 to 3 parts by mass based on 100 parts by mass of the rubber component.
(3) The sealing material further contains calcium oxide in the range of 6 to 10 parts by mass based on 100 parts by mass of the rubber component.
(4) The content of the blowing agent is in the range of 35 to 70 parts by mass based on 100 parts by mass of the rubber component.
(5) The blowing agent is azodicarbonamide.
(6) The vulcanizing agent comprises sulfur.
(7) The copolymer rubbers are ethylene-propylene-diene copolymer rubbers.

The above object is attained by a sealing material composed of a vulcanized foam of a composition for a sealing material.

The sealing material according to the present invention is made of the vulcanized foam being further subjected to cell breakage treatment. Hence, closed cells in the foam are broken, and a partly open cell structure is obtained to the rubber foam. Thereby, a sealing material having high dimensional stability and flexibility, improved adhesion property to the surface of the members to be sealed with following the shape of the surface, and more improved seal properties such as water cut-off property can be obtained.

The cell breakage treatment is preferably carried out by using at least one method selected from the group consisting of a roll-crush method, a vacuum-crush method, a needle-punch method and a plate-compression method.

Further, the sealing material of the invention preferably has 50% compressive hardness (JIS-K6767) in a thickness direction of the sealing material of 1.0kPa or less. In the case that 50% compressive hardness (JIS-K6767) in a thickness direction of the sealing material is the above-mentioned value or less, it is possible to determine that a sealing material has sufficiently high flexibility and improved adhesion property to the surface of the members to be sealed with following the shape of the surface.

Furthermore, the sealing material of the invention preferably has a density of 50kg/m³ or less.

### Advantageous Effect of the Invention

According to the present invention, a sealing material is produced by vulcanization and blowing of a composition for sealing material which comprises a rubber component comprising ethylene-α-olefin-diene copolymer rubber consisting of two copolymer rubbers having different contents of unconjugated dien with optimized the mass ratio of the copolymer rubbers. Thereby, the sealing material consisting of a rubber foam can be obtained, which has low density without decrease of water cut-off property and deterioration of cell breakage treatment property, and has improved adhesion property to the surface of the members to be sealed with following the shape of the surface. Hence, a sealing material being lightweight, highly flexible and low-cost, and having improved seal properties such as water cut-off property can be provided.

### Brief Description of the Drawings

Fig. 1 is a perspective view of a U-shaped sample to be used for evaluating water cut-off property.
Fig. 2 is a diagram for generally explaining U-shaped test method for evaluating water cut-off property.

### Description of Embodiments

The composition for a sealing material of the invention comprises a rubber component comprising copolymer rubbers of ethylene, α-olefin having 3 or more carbon atoms and unconjugated diene (ethylene-α-olefin-diene copolymer rubber), a vulcanizing agent and a blowing agent.

Further, the ethylene-α-olefin-diene copolymer rubber of the rubber component consists of copolymer rubber A and copolymer rubber B. Here, the copolymer rubber A is derived from ethylene, α-olefin having 3 or more carbon atoms and 3 to 5% by mass of unconjugated diene, and the copolymer rubber B is derived from ethylene, α-olefin having 3 or more carbon atoms and 9 to 15% by mass of unconjugated diene. Furthermore, a mass ratio (copolymer rubber B/copolymer rubber A) of the copolymer rubber B to the copolymer rubber A is in the range of 30/70 to 40/60.

In case ethylene-α-olefin-diene copolymer rubber as a rubber component consists of only copolymer rubber having a low content of unconjugated diene, a degree of vulcanization of the rubber cannot be elevated during vulcanization and blowing of a composition for sealing material, and therefore the rubber becomes a state of low viscosity. Hence, it is difficult to obtain a rubber foam having low density. On the other hand, in case ethylene-α-olefin-diene copolymer rubber of a rubber component consists of only copolymer rubber having a high content of unconjugated diene, the rubber foam is apt to crack, and cell breakage treatment property of the rubber foam occasionally deteriorates.

In the present invention, a composition for a sealing material comprises ethylene-α-olefin-diene copolymer rubber of the rubber component consists of the copolymer rubber A being derived from ethylene, α-olefin having 3 or more carbon atoms and 3 to 5% by mass unconjugated diene, and the copolymer rubber B being derived from ethylene, α-olefin having 3 or more carbon atoms and 9 to 15% by mass unconjugated diene, with the above-mentioned mass ratio of the copolymer rubbers. Accordingly, it was found that a degree of vulcanization of the rubber can appropriately get elevated at the beginning of the blowing, and thereby viscosity of the rubber can be adequate during vulcanization and blowing of a composition for sealing material. Therefore, the addition of high amount of blowing agent in the composition for a sealing material makes it possible to sufficiently trap gas generated in the rubber foam, thereby giving a sealing material having low density without decrease of water cut-off property due to cracking of the foam, and without deterioration of cell breakage treatment property.

The sealing material of the invention composed of a vulcanized foam of the composition for a sealing material of the invention. A method of vulcanization and blowing is discussed in description of preparation method described below.

Further, the vulcanized foam of the composition for a sealing material of the invention mainly has a closed cell structure. Therefore, in order to obtain a sealing material having higher dimensional stability and flexibility, more improved adhesion property to the surface of the members to be sealed with following the shape of the surface, and more improved seal properties such as water cut-off property, the sealing material is preferably subjected to cell breakage treatment which at least a part of the closed cells gets broken so that the cells communicate with each other, and a partly open cell structure is obtained.

The cell breakage treatment is discussed in description of preparation method described below.

The materials of the sealing material of the invention are explained in detail below.

### [Rubber component]

The rubber component comprises at least ethylene-α-olefin-diene copolymer rubbers as mentioned above. The ethylene-α-olefin-diene copolymer rubbers are derived from ethylene, α-olefin having 3 or more carbon atoms and unconjugated diene. Further, copolymer rubber A and copolymer rubber B having different contents of unconjugated dien are used as the ethylene-α-olefin-diene copolymer rubbers in the present invention.

The α-olefin is preferably those having 3 to 20 carbon atoms. Specific examples include propylene, 1-butene, 4-methyl-1-pentene, 1-hexene, 1-octene, 1-decene, 1-dodecene, 1-tetradecene, 1-hexadecene, 1-octadecene, and 1-eicocene. The use of propylene is particularly preferable.

As the unconjugated diene, it is possible to use 1,4-hexadiene, 1,6-octadiene, 1,7-octadiene, 1,8-nonadiene, 1,9-decadiene, 2-methyl-1,5-hexadiene, 6-methyl-1,5-hexadiene, 7-methyl-1,6-octadiene, cyclohexadiene, dicyclopentadiene, methylterahydroindene, 5-vinyl-2-norbornene (vinylnorbornen), 5-ethylidene-2-norbornene, and 5-methylene-2-norbornene. Among these materials, 5-ethylidene-2-norbornene is preferably used for remarkably obtaining the effect of the invention. The unconjugated dienes in the copolymer rubber A and the copolymer rubber B are the same as or different from each other.

The unconjugated diene content in the copolymer rubber A is in the range of 3 to 5% by mass, preferably in the range of 4 to 5% by mass based on the copolymer rubber A. Further, the unconjugated diene content in the copolymer rubber B is in the range of 9 to 15% by mass, preferably in the range of 9 to 11% by mass, particularly in the range of 9 to 10% by mass based on the copolymer rubber B.

The ethylene-α-olefin-diene copolymer rubber of the rubber component is preferably ethylene-propylene-diene copolymer rubber (occasionally abbreviated to EPDM).

In the ethylene-α-olefin-diene copolymer rubber of the rubber component, the mass ratio (copolymer rubber B/copolymer rubber A) of the copolymer rubber B to the copolymer rubber A is in the range of 30/70 to 40/60. Thereby vulcanization and blowing of the rubber composition can be conducted more successfully. Accordingly, the sealing material can be obtained, which has low density without decrease of water cut-off property due to cracking of the foam, and deterioration of cell breakage treatment property, and has improved adhesion property to the surface of the members to be sealed with following the shape of the surface.

The ethylene-α-olefin-diene copolymer rubber is included in the composition, preferably in an amount of 15% by mass or more, particularly 20% by mass or more. Accordingly, the effect of the invention can be obtained, whereby it is possible to give the sealing material having low density without decrease of water cut-off property and deterioration of cell breakage treatment property.

In the present invention, the rubber component may collaterally contain the other rubber components in addition to the ethylene-α-olefin-diene copolymer rubber. Examples of the other rubber components include ethylene-propylene rubber (EPM), butyl rubber (IIR), isoprene rubber (IR), natural rubber (NR), styrene-butadiene rubber (SBR), butadiene rubber (BR), 1,2-polybutadiene (RB), acrylic rubber (ACM, ANM), chlorosulfonated polyethylene (CSM), chloroprene rubber (CR), silicone rubber. Among these, EPM and IIR are preferred.

### [Vulcanizing agent]

Examples of the vulcanizing agent include sulfur, sulfur compound, zinc flower (zinc oxide), selenium, magnesium oxide, organic peroxides, polyamines, oximes and nitroso compounds, although there are not particular restrictions to the vulcanizing agent to be used. The vulcanizing agent preferably comprises sulfur from the viewpoint of good vulcanization and blowing condition of the resulting rubber foam,

The content of the vulcanizing agent is preferably in the range of 0.5 to 30 parts by weigh, particularly in the range of 1.0 to 20 parts by mass based on 100 parts by mass of the rubber component.

In the invention, the term "vulcanization" is not understood to be limited to bridging by using sulfur, but is used as a synonym of "crosslinkage".

### [Blowing agent]

A blowing agent is used not only for gas generation for foaming, but also used for vulcanization control with respect to the rubber component. Examples of the blowing agent include azo compounds such as azodicarbonamide (ADCA), azobisisobutyronitrile and barium azodicarboxylate, nitroso compounds such as N,N'-dinitrosopentamethylenetetramine (DPT), hydrazine compounds such as 4,4'-oxybisbenzenesulfonylhydrazide (OBSH), and inorganic compounds such as sodium bicarbonate and ammonium carbonate, although there are not particular restrictions to the blowing agent to be used. The blowing agent can be used singly, or in combination of two or more kinds. Among these, azodicarbonamide (ADCA) is particularly preferred from the viewpoint of good blowing performance, safety and avirulence.

In the invention, a content of the blowing agent in the composition is preferably more than usual in order to make the rubber foam to be low density. However, the use of the blowing agent in excessive amount may bring about cracking of the foam. Thus, for example, in the case of using ADCA as the blowing agent, the content of the blowing agent is preferably in the range of 30 to 70 parts by mass, based on 100 parts by mass of rubber component. Additionally, from the viewpoint of water cut-off property and cell breakage treatment property, the content is more preferably in the range of 35 to 70 parts by mass, particularly in the range of 35 to 50 parts by mass, based on 100 parts by mass of rubber component.

### [Zinc stearate]

In the invention, it is preferable that the rubber composition further contains zinc stearate. The zinc stearate acts as a cell diameter control agent, and is able to make the cell diameter in the rubber foam smaller. Thereby, the water cut-off property of the sealing material can be more improved. The use of the zinc stearate in excessive amount may bring about inhibition of vulcanization, and thereby cell breakage treatment property may deteriorate. Thus, the content of the zinc stearate is preferably in the range of 2 to 3 parts by mass, based on 100 parts by mass of the rubber component.

### [Calcium oxide]

In the invention, it is preferable that the rubber composition further contains calcium oxide. The calcium oxide has a function of improvement of mechanical strength. The use of the calcium oxide in excessive amount may make the cell diameter in the rubber foam coarser, and thereby the water cut-off property of the sealing material may be decreased. Thus, the content of the calcium oxide is preferably in the range of 6 to 10 parts by mass, more preferably in the range of 8 to 10 parts by mass, based on 100 parts by mass of the rubber component.

### [Calcium stearate]

In the invention, the rubber composition further contains calcium stearate. The calcium stearate acts as a cell diameter control agent, and is able to make the cell diameter in the rubber foam smaller. The use of the calcium stearate in excessive amount may bring about pinhole defects in the rubber foam. Thus, the content of the calcium stearate is preferably in the range of 1 to 3 parts by mass, more preferably in the range of 1 to 2 parts by mass, based on 100 parts by mass of the rubber component.

### [Filler]

In the invention, the rubber composition can further contain a filler. Examples of the filler include such as calcium carbonate, magnesium carbonate, silicic acid or silicate salts, talk, clay, mica flour, bentonite, carbon black, silica, aluminum hydroxide, magnesium hydroxide, alumina, aluminum silicate, acetylene black, aluminum flour, ceramic, glass fiber, wood flour, or waste textile, although there are not particular restrictions to the filler to be used. The content of the filler is not restricted in particular. It is possible to use the filler unless it inhibits the effects of the invention such as lowering of density, water cut-off property and excellent cell breakage treatment property.

### [Others]

In the invention, the rubber composition may include a further additive depending on the object. For instance, a vulcanization promoter such as thiazole promoter, dithiocarbamate promoter, thiourea promoter dithiophosphite promoter, and thiuram-based vulcanization promoting agent; a vulcanization promoting auxiliary such as zinc oxide (activated zinc flower) are used for promoting vulcanization. It is also possible to use a resin softener such as paraffin oil, process oil, blow asphalt, polybutene, rosin, or rosin ester; a resin such as polyethylene, polypropylene, ethylene-vinyl acetate copolymer; anti-aging agent, antioxidant, pigment, coloring agent, anti-mold agent, and processing aid such as stearic acid, etc. One or more of these additives can be added to the rubber composition, if necessary. The content of the additives is not restricted in particular. It is possible to use the additives unless they inhibit the effect of the invention in lowering of density, water cut-off property and cell breakage treatment property.

### [Preparation method of a sealing material]

A sealing material according to the present invention can be prepared by vulcanization and blowing of the rubber composition of the invention. Specifically, for instance, the preparation can be carried out by following procedure.

First, the mixture which does not contain a blowing agent and a vulcanizing agent and, as appropriate, a vulcanization promoter, a cell diameter control agent, etc. (including stearic acid, zinc stearate, calcium stearate and calcium oxide) is kneaded. The kneading can be carried out by use of Banbury mixer, kneader, or an enclosed mixer such as Intermix. It is preferable to perform the kneading at a temperature in the range of 80 to 170°C, particularly at a temperature in the range of 90 to 140°C, for 2 to 20 minutes. After kneading, a blowing agent, a vulcanization promoting auxiliary, a vulcanizing agent, a cell diameter control agent and calcium oxide are added to the mixture, and the mixture is kneaded. The kneading at this stage is performed preferably at a temperature in the range of 40 to 90°C, particularly at a temperature in the range of at 50 to 80°C, for 5 to 30 minutes. The resultant kneaded mixture is formed to have a desired shape such as a sheet shape by a calendering machine, or an extruder, etc.

The kneaded substance is formed to have a desired shape, and then introduced to a vulcanization apparatus. The substance is heated at a temperature in the range of 130 to 270°C, in particular at a temperature in the range of 140 to 200°C, for 1 to 30 minutes, and thereby the substance is vulcanized and blown (vulcanization and blowing step). In accordance with this treatment, a rubber foam having a closed cell structure is obtained. Heat application is carried out in a vulcanization vessel, by using heat application means such as a hot air vulcanizing vessel (HAV), glass beads fluidized bed, microwave vulcanization apparatus (UHF), or steam. Herein, vulcanization and blowing can be carried out simultaneously, or successively under different temperature conditions.

In vulcanization and blowing step, it is preferable to set the expansion ratio of the rubber foam (density ratio of the substance before and after blowing) having a closed cell structure in the range of 10 to 60 times, particularly in the range of 20 to 50 times. Thereby, a rubber foam having low density and high flexibility can be obtained.

The mean diameter of the cell in the rubber foam having a closed cell structure is preferably in the range of 400 to 2500µm, particularly in the range of 700 to 1000µm. The above-mentioned mean diameter of the cell is a value measured in accordance with ASTM D 3576 (using cross-section observation by optical microscope).

The number of the cell in the rubber foam having a closed cell structure is preferably in the range of 10 to 60/25mm (1 inch), in particular in the range of 15 to 35/25mm. Here, the number of the cell is defined as that prescribed in JIS K 6767(1999), namely the number of the cell per 25mm of the foam.

The rubber foam with a closed cell structure has 50% compressive hardness in a thickness direction of the foam at 25°C preferably in the range of 20 to 80kPa, particularly in the range of 30 to 60kPa. Here, 50% compressive hardness is a value measured pursuant to JIS K6767.

Moreover, the rubber foam with a closed cell structure has a tensile strength at tensile rupture in a longitudinal direction of the foam preferably in the range of 35 to 100kPa, particularly in the range of 50 to 90kPa. Here, the tensile strength is a value measured pursuant to JIS K6767 (A method).

In the preparation of the sealing material in the invention, after vulcanization and blowing step of the composition for a sealing material, the resultant rubber foam is subjected to cell breakage treatment. The cell breakage treatment is conducted for giving the rubber foam a partly open cell structure by breaking at least a part of the closed cells so that the cells communicate with each other. The rubber foam made of the composition for a sealing material of the invention has good cell breakage treatment property, in other words, can be subjected the cell breakage treatment without cracks, fracture and deformation. Therefore, the sealing material having high dimensional stability and flexibility, improved adhesion property to the surface of the members to be sealed with following the shape of the surface, and more improved seal properties such as water cut-off property can be obtained by the cell breakage treatment.

The cell breakage treatment is carried out by known methods, for example, by placing and compressing the rubber foam between a pair of rotatable rollers (a roll-crush method). Alternatively, the methods are carried out by the rubber foam compressing under vacuum conditions (a vacuum-crush method), by punching with a number of needles,. e.g. a needle punch (a needle-punch method), or by placing and compressing the rubber foam between a pair of plates (a plate-compression method). Of these methods, roll crush method is preferably used so as to ensure cell breakage.

More specifically, the roll crush method is carried out by applying a compression deformation to rubber foam having a closed cell structure in a thickness direction of the rubber foam by use of a pair of rotatable rollers. The breakage to ensure the open cell structure can be promoted when a number of small needles are provided on the surface of the rotatable rollers, or when a roller/rollers having numerous small needles or needle punch(es) is/are additionally provided at a location ahead or behind the pair of rotatable rollers.

The rubber foam with the closed cell structure is compressed to a thickness preferably 1/10 to 1/2, particularly 1/5 to 1/2, compared to the original thickness. The cell breakage treatment can be conducted a plurality of times by using a plurality of pairs of rollers. Here, the distance between a pair of rollers can be different from the distance between a different pair of rollers. The diameter of each roller is preferably 5cm or more. The rotational speed of a roller is preferably in the range of 3 to 70m/min, particularly in the range of 25 to 50m/min. In order to improve the efficiency of the cell breakage treatment, the rotational speed of at least one of the rollers in the pair of rollers can be changed.

The ratio of the closed cell in the sealing material after the open cell structure is obtained by the cell breakage treatment is preferably 20% or less, particularly 1 to 10%. In other words, the sealing material preferably has a high open cell ratio. The ratio of the closed cell here is a value measured pursuant to a method prescribed in ASTM D2856.

The sealing material of the invention subjected to the cell breakage treatment has preferably 50% compressive hardness (JIS-K6767) in a thickness direction of the foam of 1.0kPa or less. In the case that 50% compressive hardness in a thickness direction of the sealing material is 1.0kPa or less, it is possible to determine that a sealing material has sufficiently high flexibility and improved adhesion property to the surface of the members to be sealed with following the shape of the surface. The 50% compressive hardness is more preferably 0.7kPa or less, particularly 0.5kPa or less.

Additionally, it is also possible to evaluate the sealing material the adhesion property to the surface of the members to be sealed with following the shape of the surface by 80% compressive hardness. The 80% compressive hardness is preferably 3.0kPa or less, more preferably 2.5kPa or less, particularly 1.5kPa or less.

Furthermore, the density (mass/volume) of the sealing material of the invention subjected to the cell breakage treatment is preferably 50kg/m³ or less, more preferably 47kg/m³ or less, particularly 42kg/m³ or less, although there are not particular restrictions to the density. When a sealing material has such a low density, the sealing material can have more sufficiently high flexibility and improved adhesion property to the surface of the members to be sealed with following the shape of the surface. Here, the density is a value measured in accordance with a method prescribed in JIS-K7222.

For sealing a gap formed between members, the sealing material of the present invention is applicable, for instance, to a window-dam in vehicles; electric installations such as air-conditioner, washing machine, refrigerator, and vending machine; audio equipments; outer wall joint, sash, roof joint parts in architecture, housing equipment such as kitchen apparatus, modular bath, and water heater; joint in structures, roads, bridges or joint part of waterway in construction work. Moreover, the sealing material is used for dust-proof, heat insulation, sound insulation, vibration-proof, shock absorption, watertight, and airtight purposes. For instance, the sealing material can be used as a dust-proof material, a heat insulator, a sound insulator, a vibration insulator, a shock absorber, and a filling material.

The sealing material preferably has a sheet-shape. It is possible to apply an adhesive agent or a double-sided tape at least on one surface of the sealing material, to have an exfoliate paper to the surface. The thickness of the sealing material is decided depending on the usage, and preferably in the range of 20 to 100mm.

### Examples

The invention is illustrated in detail using the following Examples.

### (Examples 1 to 28 and Comparative Examples 1 to 3)

Copolymer rubber A and copolymer rubber B shown in the following formulation were respectively supplied to a kneader together with a filler, stearic acid (processing aid), zinc oxide and process oil, then mixed by a kneader at 130°C for 10 minutes. Subsequently, the kneaded mixtures were cooled to have a surface temperature of 25°C,which resulted in the 2 types kneaded mixtures. Then the kneaded mixture comprising the copolymer rubber A and the kneaded mixture comprising the copolymer rubber B were supplied to kneader with the mass ratio of the copolymer rubber B to the copolymer rubber A of Examples and Comparative Examples shown in Tables 1 to 3. Additionally, other materials (a blowing agent, a vulcanizing agent, a vulcanization promoter, calcium oxide, zinc stearate, calcium stearate, stearic acid and urea) were added to the mixtures. Then the mixtures were mixed by a kneader at 90°C for 7 minutes. The resultant kneaded mixtures were formed to have a sheet form, through an extruder for rubbers. The formed mixtures were introduced to a heating furnace, and vulcanized and blown at 170°C for 60 minutes, whereby rubber foams having a closed cell structure were obtained. Tables 1 to 3 also show the composition of a blowing agent, vulcanizing agent, a vulcanization prompter and a filler in the formulation.

Thereafter, rubber foams with a closed cell structure were successively placed between a pair of rotatable rollers (diameter: 15cm, rotational speed of rollers: 10m/min, distance between rollers: 20mm), and compressed by the rollers to crush the foams in the thickness direction thereof. As a result, sealing materials composed of the rubber foams with an open cell structure were obtained.

Following is the detail of the components in the formulation. Detailed description for the other usual components will be omitted.

Copolymer rubber A (EPDM (Esprene (Trademark) 501A, manufactured by Sumitomo Chemical Co., Ltd; ethylene content: 52 % by mass, unconjugated diene (5-ethylidene-2-norbornene) content: 4 % by mass)

Copolymer rubber B (EPDM (EPT8030M, manufactured by Mitsui Chemicals, Inc.; ethylene content: 47 % by mass, unconjugated diene (5-ethylidene-2-norbornene) content: 9.5 % by mass)

### (Evaluation method)

### (1) Density

The density of the sealing material obtained by cell breakage treatment was determined in accordance with a method prescribed in JIS-K7222. Namely, a sample having a volume of 100×100×10mm regarding the sealing material was precisely cut out, and then the mass of the sample was measured.

### (2) Number of cell

The number of cell (bubble) was determined in accordance with a method prescribed in JIS-K6767 (1999). Namely, the number of the cell per 25mm (1 inch) of the foam was measured.

### (3) Tensile strength

The tensile strength of the rubber foams (at tensile rupture in a longitudinal direction of the foam) was measured pursuant to a method prescribed in JIS-K 6767 (A method) by using a tensile strength tester (Autograph, manufactured by Shimadzu Corporation). The tensile strength was evaluated as follows.
○: the tensile strength is 35kPa or more.
×: the tensile strength is less than 35kPa.

### (4) Cell breakage treatment property

The rubber foams before cell breakage treatment were subjected to a cell communication treatment as described above. Thereafter, the conditions of the rubber foams were evaluated as follows.
○: Cracks, fracture and deformation was not observed.
Δ: Small cracks, fracture and deformation was observed.
×: Large cracks, fracture and deformation was observed.

### (5) Water cut-off property

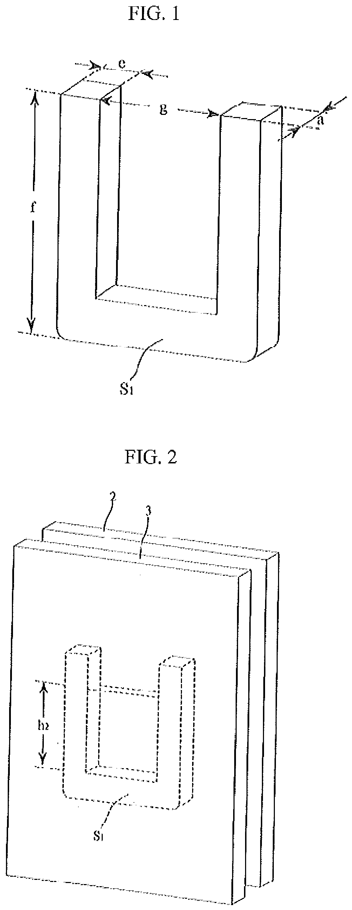

The sealing material which was subjected to cell breakage treatment was punched out to obtain a sample S1 in the form of a U shape, as shown in Fig. 1, which has a thickness (a) of 10mm, a width (e) of 10mm, a height (f) of 130mm, and an interval (g) between free ends of the sample of 45mm. The sample S1 was subjected to 80% compression in the thickness direction of the sample by using two acrylic boards 2 and 3 as shown in Fig. 2. Water was poured to the inside of the U shape to the level of 100mm (h2). The time period for water leakage being observed was measured. The evaluation is as follows.
○: Water leakage was not observed more than 24 hours.
Δ: Water leakage was observed in 12 to 24 hours.
×: Water leakage was observed in 12 hours or less.

### (6) Compressive hardness

50% Compressive hardness of the rubber forms was measured pursuant to a method prescribed in JIS-K6767. Further, 80% compressive hardness of the rubber foams was also measured as in the case of 50% Compressive hardness.

### (Evaluation result)

The evaluation results are shown in Tables 1 to 3.
Examples 1-2, 5, 21-22 and 25-28 have been provided as reference examples only.

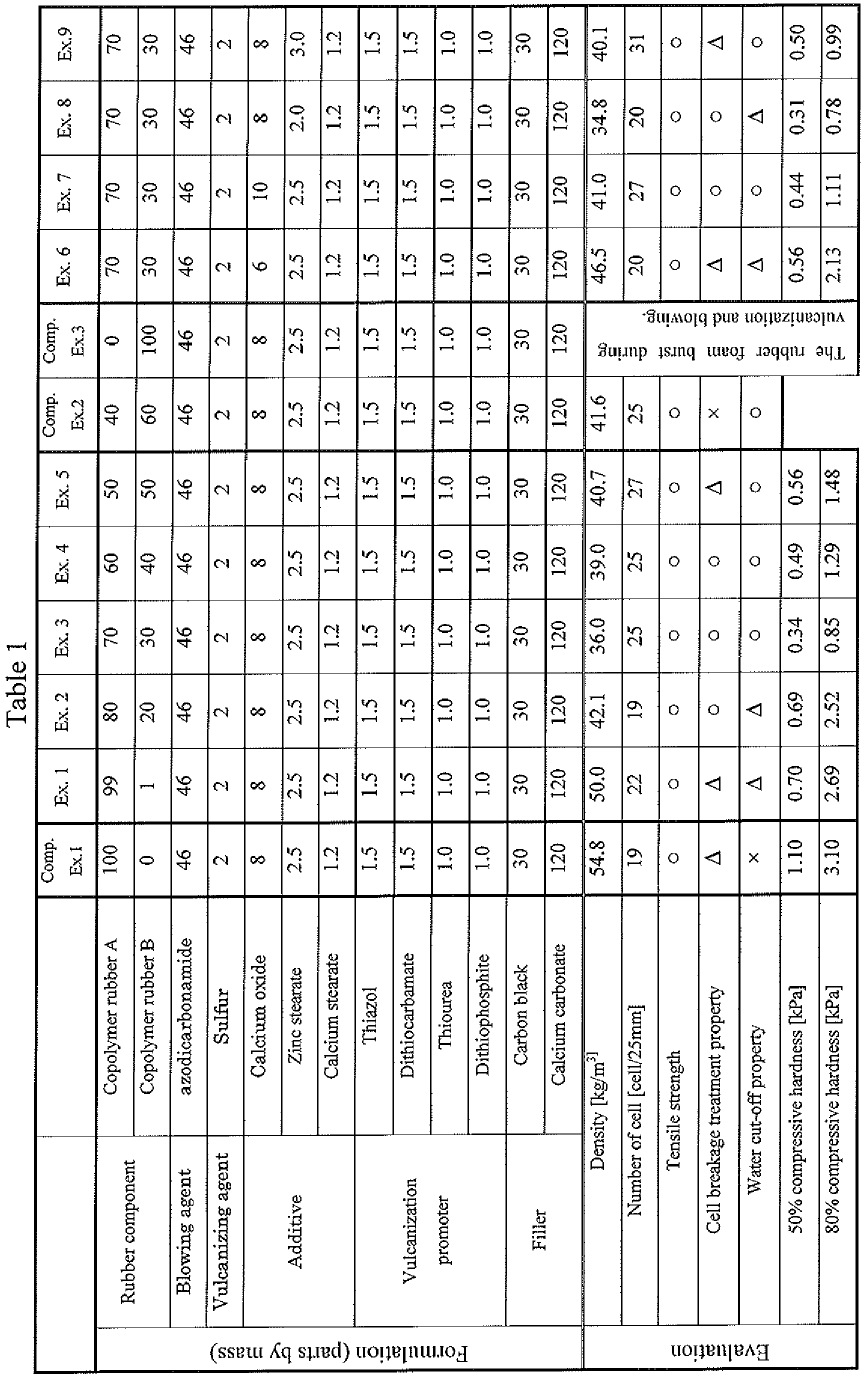

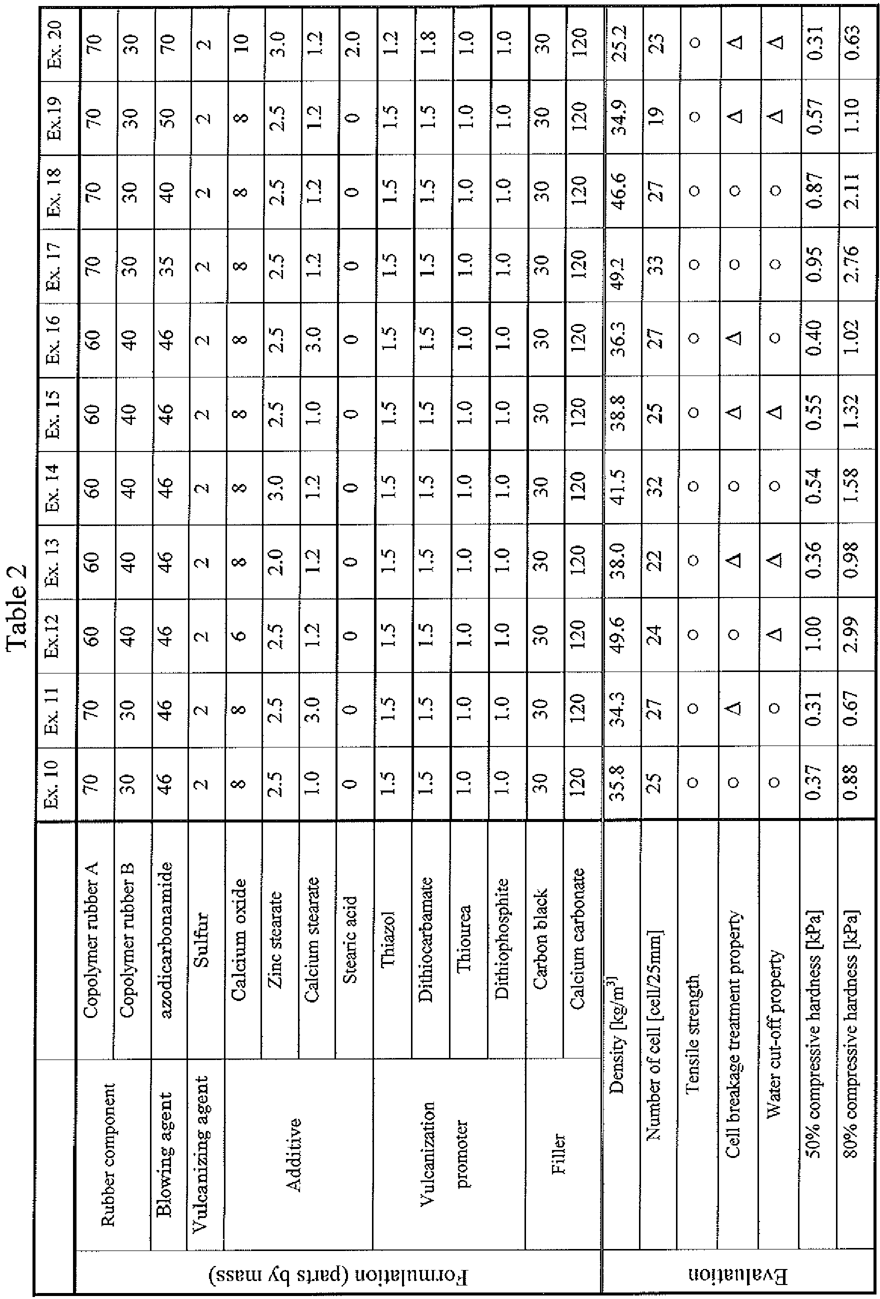

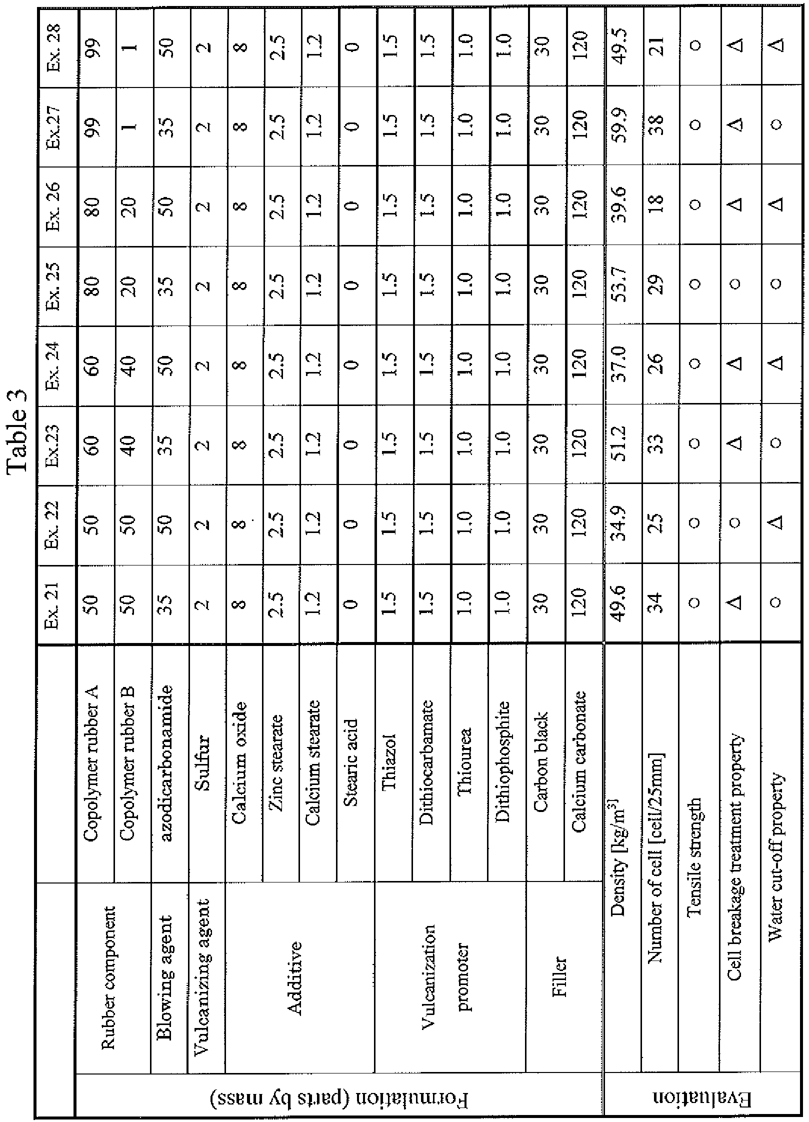

As shown in Tables, the rubber components consisting of copolymer rubber A having 4% by mass of unconjugated diene and copolymer rubber B having 9% by mass of unconjugated diene were used in Examples 1 to 5. These Examples showed that the sealing materials of the Examples have lower density, 50% compressive hardness of 1.0kPa or less, more improved water cut-off property and cell breakage treatment property, compared to the sealing material of Comparative Example 1 in which the rubber component consisting of only copolymer rubber A was used. On the other hand, the sealing material of Comparative Example 2 in which the mass ratio of the copolymer rubber B to the copolymer rubber A is 60/40 showed deteriorated cell breakage treatment property. Further, in Comparative Example 3 in which the rubber component consisting of only copolymer rubber B was used, the rubber foam burst during vulcanization and blowing, thereby making it impossible to evaluate the rubber foam as the sealing material. Therefore, it was found that the sealing materials have excellent properties when the mass ratio of the copolymer rubber B to the copolymer rubber A is in the range of 1/99 to 50/50. Additionally, the results of evaluation of the water cut-off property and the cell breakage treatment property showed that the mass ratio of the copolymer rubber B to the copolymer rubber A is preferably in the range of 30/70 to 40/60.

Further, the results of Examples 3, 4, 6, 7 and 12 showed that excellent sealing material can be obtained when a content of the calcium oxide is in the range of 6 to 10 parts by mass based on 100 parts by mass of the rubber component. Furthermore, the results of Examples 3, 4, 8, 9, 13 and 14 showed that excellent sealing material can be obtained when a content of the zinc stearate is in the range of 2 to 3 parts by mass based on 100 parts by mass of the rubber component. Moreover, the results of Examples 3, 4, 10, 11, 15 and 16 showed that excellent sealing material can be obtained when a content of the calcium stearate is in the range of 1 to 3 parts by mass based on 100 parts by mass of the rubber component.

On the other hand, in the results of Examples 17 to 28, it was found that higher content of the blowing agent in the composition makes the rubber foam to be lower density, but the excessive amount of the blowing agent is apt to decrease the water cut-off property and the cell breakage treatment property. Therefore, those results showed that the content of the blowing agent is preferably in the range of 35 to 70 parts by mass based on 100 parts by mass of rubber component.

The above-mentioned results demonstrated that according to the composition for a sealing material of the invention, the sealing material can be obtained, which has low density without decrease of water cut-off property and deterioration of cell breakage treatment property, and has improved adhesion property to the surface of the members to be sealed with following the shape of the surface.

### Description of the reference numbers

S1: U-shaped sample
2, 3: Acrylic boards

## Claims

1. A sealing material composed of a vulcanized foam of a composition, wherein the composition comprises a rubber component comprising copolymer rubbers of ethylene, α-olefin having 3 or more carbon atoms and unconjugated diene, a vulcanizing agent and a blowing agent,
wherein the copolymer rubber consists of copolymer rubber A and copolymer rubber B, the copolymer rubber A being derived from ethylene, α-olefin having 3 or more carbon atoms and 3 to 5% by mass of unconjugated diene, and the copolymer rubber B being derived from ethylene, α-olefin having 3 or more carbon atoms and 9 to 15% by mass unconjugated diene, and
a mass ratio (copolymer rubber B/copolymer rubber A) of the copolymer rubber B to the copolymer A is in the range of 30/70 to 40/60,
the composition further contains calcium stearate in the range of 1 to 3 parts by mass based on 100 parts by mass of the rubber component, and wherein the vulcanized foam is further subjected to a cell breakage treatment.

2. The sealing material as defined in claim 1, wherein the unconjugated diene of the copolymer rubber includes 5-ethylidene-2-norbornene.

3. The sealing material as defined in claim 1, which further contains zinc stearate in the range of 2 to 3 parts by mass based on 100 parts by mass of the rubber component.

4. The sealing material as defined in claim 1, which further contains calcium oxide in the range of 6 to 10 parts by mass based on 100 parts by mass of the rubber component.

5. The sealing material as defined in claim 1, wherein the content of the blowing agent is in the range of 35 to 70 parts by mass based on 100 parts by mass of the rubber component.

6. The sealing material as defined in claim 1, wherein the blowing agent is azodicarbonamide.

7. The sealing material as defined in any of claims 1 to 6, wherein the sealing material has 50% compressive hardness (JIS-K6767) in a thickness direction of the sealing material of 1.0kPa or less.

8. The sealing material as defined in claim 7, wherein the sealing material has a density of 50kg/m³ or less.

## Patentansprüche

1. Dichtungsmaterial, das aus einem vulkanisierten Schaum einer Zusammensetzung besteht, wobei die Zusammensetzung eine Kautschukkomponente, die Copolyesterkautschuke von Ethylen, α-Olefin, das 3 oder mehr Kohlenstoffatome aufweist, und unkonjugiertem Dien umfasst, ein Vulkanisiermittel und ein Treibmittel umfasst,
wobei der Copolymerkautschuk aus Copolymerkautschuk A und Copolymerkautschuk B besteht, wobei der Copolymerkautschuk A von Ethylen, α-Olefin, das 3 oder mehr Kohlenstoffatome aufweist, und 3 bis 5 Masse-% unkonjugiertem Dien abgeleitet ist, und der Copolymerkautschuk B von Ethylen, α-Olefin, das 3 oder mehr Kohlenstoffatome aufweist, und 9 bis 15 Masse-% unkonjugiertem Dien abgeleitet ist und
ein Masseverhältnis (Copolymerkautschuk B/Copolymerkautschuk A) des Copolymerkautschuks B zu dem Copolymerkautschuk A im Bereich von 30/70 bis 40/60 liegt,
die Zusammensetzung ferner Calciumstearat im Bereich von 1 bis 3 Masseteilen, auf 100 Masseteile der Kautschukkomponente bezogen, enthält und wobei der vulkanisierte Schaum ferner einer Zellbrechbehandlung unterworfen wird.

2. Dichtungsmaterial wie in Anspruch 1 definiert, wobei das unkonjugierte Dien des Copolymerkautschuks 5-Ethyliden-2-norbornen umfasst.

3. Dichtungsmaterial wie in Anspruch 1 definiert, das ferner Zinkstearat im Bereich von 2 bis 3 Masseteilen, auf 100 Masseteile der Kautschukkomponente bezogen, enthält.

4. Dichtungsmaterial wie in Anspruch 1 definiert, das ferner Calciumoxid im Bereich von 6 bis 10 Masseteilen, auf 100 Masseteile der Kautschukkomponente bezogen, enthält.

5. Dichtungsmaterial wie in Anspruch 1 definiert, wobei der Gehalt des Treibmittels im Bereich von 35 bis 70 Masseteilen, auf 100 Masseteile der Kautschukkomponente bezogen, liegt.

6. Dichtungsmaterial wie in Anspruch 1 definiert, wobei das Treibmittel Azodicarbonamid ist.

7. Dichtungsmaterial wie in einem der Ansprüche 1 bis 6 definiert, wobei das Dichtungsmaterial eine 50 %-ige Druckhärte (JIS-K6767) in einer Dickenrichtung des Dichtungsmaterial von 1,0 kPa oder weniger aufweist.

8. Dichtungsmaterial wie in Anspruch 7 definiert, wobei das Dichtungsmaterial eine Dichte von 50 kg/m³ oder weniger aufweist.

## Revendications

1. Matériau d'étanchéité composé d'une mousse vulcanisée d'une composition, la composition comprenant un constituant de caoutchouc comprenant des caoutchoucs copolymères d'éthylène, d'α-oléfine ayant 3 atomes de carbone ou plus et de diène non conjugué, un agent de vulcanisation et un agent d'expansion,
le caoutchouc copolymère étant constitué du caoutchouc copolymère A et du caoutchouc copolymère B, le caoutchouc copolymère A étant dérivé d'éthylène, α-oléfine ayant 3 atomes de carbone ou plus et de 3 à 5 % en masse de diène non conjugué, et le caoutchouc copolymère B étant dérivé d'éthylène, α-oléfine ayant 3 atomes de carbone ou plus et de 9 à 15 % en masse de diène non conjugué, et
un rapport en masse (caoutchouc copolymère B/caoutchouc copolymère A) du caoutchouc copolymère B au copolymère A se situant dans la plage de 30/70 à 40/60,
la composition contenant en outre du stéarate de calcium dans la plage de 1 à 3 parties en masse sur la base de 100 parties en masse du constituant de caoutchouc, et la mousse vulcanisée étant en outre soumise à un traitement de rupture d'alvéoles.

2. Matériau d'étanchéité tel que défini selon la revendication 1, le diène non conjugué du caoutchouc copolymère comprenant du 5-éthylidène-2-norbornène.

3. Matériau d'étanchéité tel que défini selon la revendication 1, qui contient en outre du stéarate de zinc dans la plage de 2 à 3 parties en masse sur la base de 100 parties en masse du constituant de caoutchouc.

4. Matériau d'étanchéité tel que défini selon la revendication 1, qui contient en outre de l'oxyde de calcium dans la plage de 6 à 10 parties en masse sur la base de 100 parties en masse du constituant de caoutchouc.

5. Matériau d'étanchéité tel que défini selon la revendication 1, la teneur de l'agent d'expansion se situant dans la plage de 35 à 70 parties en masse sur la base de 100 parties en masse du constituant de caoutchouc.

6. Matériau d'étanchéité tel que défini selon la revendication 1, l'agent d'expansion étant l'azodicarbonamide.

7. Matériau d'étanchéité tel que défini selon l'une quelconque des revendications 1 à 6, le matériau d'étanchéité ayant une dureté à la compression de 50 % (JIS-K6767) dans un sens de l'épaisseur du matériau d'étanchéité de 1,0 kPa ou moins.

8. Matériau d'étanchéité tel que défini selon la revendication 7, le matériau d'étanchéité ayant une densité de 50 kg/m³ ou moins.
